# EUROPEAN PATENT APPLICATION

(11) **EP 2 674 265 A1**
(43) Date of publication of application: **18.12.2013**
(21) Application number: 11858200.6
(22) Date of filing: 05.12.2011
(51) Int. Cl.: B25J 18/00, B25J 11/00

(54) **SHAPED PIPE BODY**

(30) Priority: 07.02.2011 JP 2011024311; 07.02.2011 JP 2011024358
(71) Applicant: JX Nippon Oil & Energy Corporation, Chiyoda-ku Tokyo 100-8162 (JP)
(72) Inventor: TAKEMURA Shinichi, Tokyo 100-8162 (JP); TAYAMA Toru, Tokyo 100-8162 (JP); UCHIDA Daisuke, Tokyo 100-8162 (JP)
(74) Representative: Grünecker, Kinkeldey, Stockmair & Schwanhäusser
(86) International application number: PCT/JP2011/078103
(87) International publication number: WO 2012/108096

(57) **Abstract**

A lower arm 7 that is a shaped pipe body includes an outer layer 71 and an inner layer 72 that are each formed into a circular pipe shape from CFRP, and therefore, rigidity is ensured. Further, the lower arm 7 includes a vibration damping layer 73 disposed between the outer layer 71 and the inner layer 72, and therefore, a vibration damping property is enhanced. Therefore, in a robot arm 3 using the lower arm 7, rigidity is ensured, and the vibration damping property is enhanced. Further, in the lower arm 7, a male screw 74a is provided at the one end portion including one end 71a of the outer layer 71. Therefore, at a time of bonding the lower arm 7 and a connecting member 9, screwing of the male screw 74a and a female screw 9a can be used in addition to bonding with an adhesive. Consequently, according to the lower arm 7, bonding to the connecting member 9 can be reinforced.

## Description

### Technical Field

The present invention relates to a shaped pipe body for use in a robot arm of a picking robot for picking up and transferring an object.

### Background Art

As a conventional picking robot, the industrial robot device described in, for example, Patent Literature 1 is known. The industrial robot device includes a robot arm having an upper arm with a base end connected to a main body section of the industrial robot device, and a lower arm with a base end connected to a tip end of the upper arm. In the robot arm like this, shaped pipe bodies made of a metal such as aluminum are used as the upper arm and the lower arm. Further, connection of, for example, the shaped pipe bodies is performed via connecting members bonded to the respective shaped pipe bodies.

### Citation List

### Patent Literature

Patent Literature 1: Japanese Unexamined Patent Application Publication No. 2003-524530

### Summary of the Invention

### Technical Problem

Incidentally, an industrial robot device as described above moves at a high speed in a state in which the industrial robot device holds an object on a tip end portion of a robot arm (that is, the tip end portion of a shaped pipe body as a lower arm). Consequently, in the robot arm of the industrial robot device like this, ensuring rigidity and enhancing a vibration damping property are desired in order to enable an object to be reliably held even at the time of high-speed movement. Further, in a shaped pipe body for use in the robot arm of an industrial robot device like this, reinforcing bonding to a connecting member while securing rigidity is desired in order to enable an object to be held reliably even at the time of high-speed movement.

Therefore, the present invention has an object to provide a shaped pipe body capable of ensuring rigidity of a robot arm and enhancing a vibration dumping property, and a shaped pipe body capable of reinforcing bonding to a connecting member while ensuring rigidity.

### Solution to Problem

One aspect of the present invention relates to a shaped pipe body. The shaped pipe body is a shaped pipe body for use in a robot arm of a picking robot for picking up and transferring an object, and includes an outer layer that is formed into a circular pipe shape from a carbon fiber reinforced plastic, an inner layer that is formed into a circular pipe shape from the carbon fiber reinforced plastic and is disposed in an inner side of the outer layer to extend from one end of the outer layer to the other end, and a vibration damping layer that is disposed between the outer layer and the inner layer.

In the shaped pipe body, the outer layer and the inner layer that are each formed into a circular pipe shape from carbon fiber reinforced plastic are included, and therefore, rigidity is ensured. Further, the shaped pipe body includes the vibration damping layer which is disposed between the outer layer and the inner layer, and therefore, the vibration damping property is enhanced. Accordingly, by using the shaped pipe body in a robot arm, the rigidity of the robot arm can be ensured and the vibration damping property can be enhanced.

In the shaped pipe body, the vibration damping layer can be formed into a circular pipe shape. According to the configuration, the vibration damping property is isotropically enhanced with respect to circumferential directions of the outer layer and the inner layer.

Further, in the shaped pipe body, the vibration damping layer can be disposed between the outer layer and the inner layer to extend from the one end to the other end. According to the configuration, the vibration damping property is further enhanced.

Alternatively, in the shaped pipe body, the vibration damping layer may be disposed between the outer layer and the inner layer to extend from the one end to a predetermined position between the one end and the other end. According to the configuration, the vibration damping property is enhanced, and reduction of rigidity is restrained.

Another aspect of the present invention relates to another shaped pipe body. The shaped pipe body is a shaped pipe body for use in a robot arm of a picking robot for picking up and transferring an object, and includes an outer layer that is formed into a circular pipe shape from the carbon fiber reinforced plastic, wherein a male screw is provided on at least one end portion of the outer layer.

In the shaped pipe body, the outer layer is formed into a circular pipe shape from the carbon fiber reinforced plastic. Therefore, higher rigidity is ensured as compared with a shaped pipe body of a metal. Further, in the shaped pipe body, the male screw is provided at the one end portion of the outer layer like this. Therefore, by providing a female screw at a connecting member, screwing of the male screw and the female screw can be used in addition to bonding with an adhesive, at the time of bonding of the shaped pipe body and the connecting member. Accordingly, bonding to the connecting member can be reinforced.

In the shaped pipe body, a sectional shape of a screw groove of the male screw can be a rectangular shape. Alternatively, a sectional shape of a screw groove of the male screw can be a trapezoidal shape that is narrowed toward an interior of the outer layer. According to these configurations, bottom portions of the screw grooves are flat. Therefore, when a certain stress occurs to the shaped pipe body, concentration of the stress onto one portion of the bottom portion of the screw groove is avoided. As a result, fracture with the screw groove as the origin is prevented.

Further, in the shaped pipe body, an inner layer that is formed into a circular pipe shape from the carbon fiber reinforced plastic and is disposed in an inner side of the outer layer to extend from the one end of the outer layer to the other end, and a vibration damping layer that is disposed between the outer layer and the inner layer can be further included. According to the configuration, the inner layer is also formed into a circular pipe shape from the carbon fiber reinforced plastic, and therefore, higher rigidity is ensured. Furthermore, the vibration damping layer is disposed between the outer layer and the inner layer, and therefore, the vibration damping property is enhanced.

Further, in the shaped pipe body, the vibration damping layer can be formed into a circular pipe shape. According to the configuration, the vibration damping property is isotropically enhanced with respect to the circumferential directions of the outer layer and the inner layer.

Further, in the shaped pipe body, the vibration damping layer can be disposed between the outer layer and the inner layer to extend from the one end to the other end. According to the configuration, the vibration damping property is further enhanced.

Alternatively, in the shaped pipe body, the vibration damping layer may be disposed between the outer layer and the inner layer to extend from the one end to a predetermined position between the one end and the other end. According to the configuration, the vibration damping property is enhanced, and reduction of rigidity is restrained.

### Advantageous Effects of Invention

According to the present invention, the shaped pipe body that can ensure rigidity of the robot arm and enhance the vibration damping property, and the shaped pipe body that can reinforce bonding to the connecting member while ensuring rigidity can be provided.

### Brief Description of Drawings

[Figure 1] Figure 1 is a perspective view of a picking robot including a robot arm using one embodiment of a shaped pipe body of the present invention.
[Figure 2] Figure 2 is a perspective view schematically showing a configuration of a lower arm shown in Figure 1.
[Figure 3] Figure 3 is a sectional view taken along III-III of Figure 2.
[Figure 4] Figure 4 is a plan view showing a structure of an end portion of the lower arm shown in Figure 1.
[Figure 5] Figure 5 is a plan view showing a structure of an upper arm shown in Figure 1.
[Figure 6] Figure 6 is a schematic view showing a modification example of the lower arm shown in Figure 1.
[Figure 7] Figure 7 is a perspective view showing the modification example of the lower arm shown in Figure 1.
[Figure 8] Figure 8 is a sectional view showing the modification example of the lower arm shown in Figure 1.
[Figure 9] Figure 9 is a perspective view showing a configuration of a holding member for use in evaluation of a vibration damping property.
[Figure 10] Figure 10 is a graph showing an evaluation result of the vibration damping property.
[Figure 11] Figure 11 is a graph showing the evaluation result of the vibration damping property.
[Figure 12] Figure 12 is a schematic view showing a configuration of an example of the shaped pipe body of the present invention.
[Figure 13] Figure 13 is a schematic view showing a configuration of a shaped pipe body of a comparative example.
[Figure 14] Figure 14 is a schematic view showing a configuration of a shaped pipe body of another comparative example.

### Description of Embodiments

Hereinafter, one embodiment of the present invention will be described in detail with reference to the drawings. Note that in the respective drawings, the same or the corresponding parts are assigned with the same reference signs, and the redundant description will be omitted.

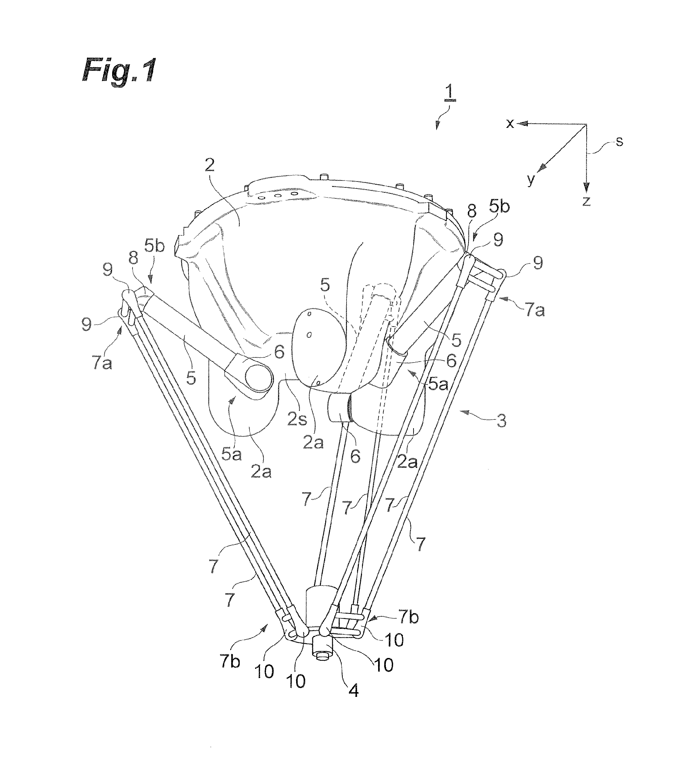

Figure 1 is a perspective view of a picking robot including a robot arm using one embodiment of a shaped pipe body of the present invention. As shown in Figure 1, a picking robot 1 includes a main body 2, a robot arm 3 connected to the main body 2, and a picking device 4 that is mounted to a tip end of the robot arm 3. The picking robot 1 like this picks up and transfers an object (for example, a medicine, a foodstuff and the like) in a state in which the picking robot is suspended in a plant.

The main body 2 is made movable optionally within an x-y plane in an orthogonal coordinate system S in the drawing. An undersurface 2s of the main body 2 is provided with a plurality of (three in this case) connecting portions 2a for connecting upper arms 5 of the robot arm 3, which will be described later, to the main body 2.

The robot arm 3 has a plurality of (three in this case) upper arms (shaped pipe bodies) 5 each in a long cylinder shape. The upper arm 5 has a base end 5a thereof connected to the connecting portion 2a of the main body 2. Connection of the upper arm 5 and the main body 2 is performed via a connecting member 6 that is mounted to the base end 5a of the upper arm 5. The upper arm 5 is made rotatable around the base end 5a in a state in which the upper arm 5 is connected to the main body 2.

Further, the robot arm 3 has a plurality (six in this case) of lower arms (shaped pipe bodies) 7 each in a long cylinder shape. The lower arm 7 shows a cylindrical shape with a diameter smaller than the upper arm 5. The lower arm 7 has a base end 7a thereof connected to a tip end 5b of the upper arm 5. Here, the two lower arms 7 are connected to the one upper arm 5. Connection of the lower arm 7 and the upper arm 5 is performed via a connecting member 8 that is mounted to the tip end 5b of the upper arm 5, and a connecting member 9 that is mounted to the base end 7a of the lower arm 7.

The picking device 4 is mounted to a tip end 7b of the lower arm 7 via a connecting member 10. The picking device 4 picks up an object by, for example, vacuum suction or the like. In the picking robot 1, the main body 2 moves within the x-y plane while the upper arm 5 rotates, and thereby the picking device 4 can be moved to an optional position within an x-y-z space.

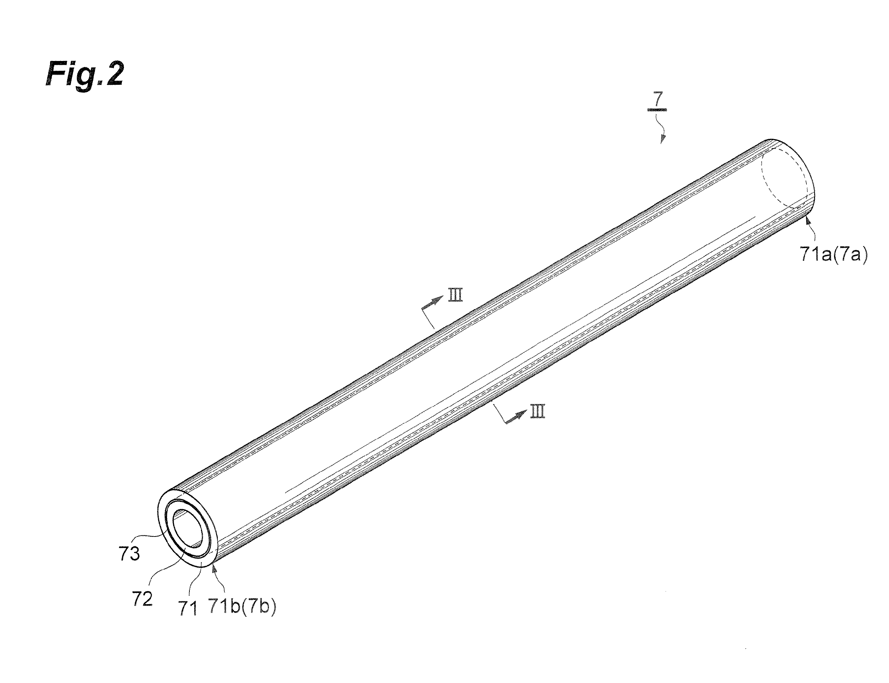

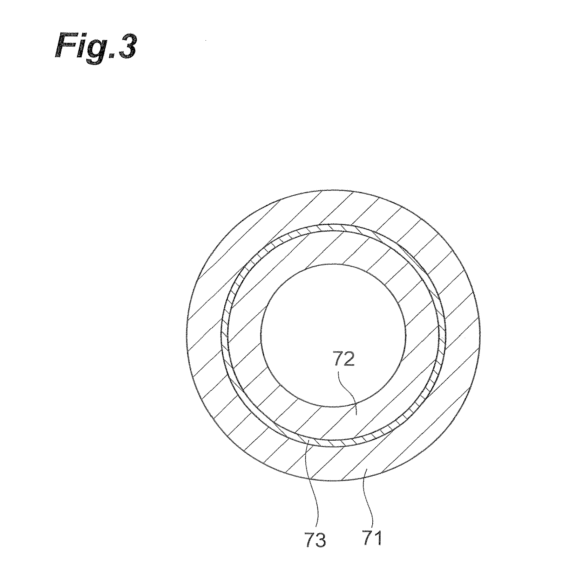

Figure 2 is a perspective view schematically showing a configuration of the lower arm 7, and Figure 3 is a sectional view taken along the III-III line of Figure 2. As shown in Figure 2 and Figure 3, the lower arm 7 has an outer layer 71 formed into a circular pipe shape, an inner layer 72 that is formed into a circular pipe shape, and is disposed in an inner side of the outer layer 71 to extend from the one end 71a of the outer layer 71 to the other end 71 b of the outer layer 71, and a vibration damping layer 73 that is disposed between the outer layer 71 and the inner layer 72. Namely, in the lower arm 7, the vibration damping layer 73 is laminated on the inner layer 72 to cover the inner layer 72 in a circular pipe shape, and the outer layer 71 is laminated on the vibration damping layer 73 to cover the vibration damping layer 73. Note that the one end 71a of the outer layer 71 is the base end 7a of the lower arm 7, and the other end 71b of the outer layer 71 is the tip end 7b of the lower arm 7. The lower arm 7 may be in the circular pipe shape in which an outside diameter and an inside diameter are not changed from the base end 7a thereof to the tip end 7b, or may be in a taper shape in which the outside diameter and the inside diameter are made smaller toward the tip end 7b from the base end 7a thereof. In a case of the lower arm being formed into the taper shape, the diameter thereof is made smaller toward the tip end 7b, that is, a weight of the tip end 7b side of the lower arm 7 is made small, and thereby, the vibration damping property can be improved.

The outer layer 71 and the inner layer 72 are formed from carbon fiber reinforced plastics (hereinafter, called "CFRP: Carbon Fiber Reinforced Plastics"). More specifically, the outer layer 71 and the inner layer 72 are produced by laminating a plurality of layers of the carbon fiber prepregs (for example, six layers for the outer layer 71, and five layers for the inner layer 72) formed by impregnating carbon fiber layers containing carbon fiber oriented in a predetermined direction with a matrix resin (for example, an epoxy resin) and thermally curing the carbon fiber prepregs.

As the carbon fiber prepregs for the outer layer 71 and the inner layer 72, for example, the carbon fiber prepreg B24N35R125 made by JX Nippon Oil & Energy Corporation (carbon fiber: PAN-based carbon fiber made by Mitsubishi Rayon Co., Ltd. (trade name: PYROFIL TR30S), matrix resin: 130° cured epoxy, carbon fiber mass per unit area: 125 g/m², resin content: 35 weight%, prepreg thickness: 0.126 mm), the carbon fiber prepreg E6025E-26K made by JX Nippon Oil & Energy Corporation (carbon fiber: pitch-based carbon fiber made by Nippon Graphite Fiber Co., Ltd. (trade name: GRANOC XN-60), matrix resin: 130° cured epoxy, carbon fiber mass per unit area: 260 g/m², resin content: 27.5 weight%, prepreg thickness: 0.202 mm), the carbon fiber prepreg B24N33C269 made by JX Nippon Oil & Energy Corporation (carbon fiber: PAN-based carbon fiber made by Mitsubishi Rayon Co., Ltd. (trade name: PYROFIL TR30S), matrix resin: 130° cured epoxy, carbon fiber mass per unit area: 269 g/m², resin content: 33.4 weight%, prepreg thickness: 0.260 mm), and a plain-woven carbon fiber prepreg FMP61-2026A made by JX Nippon Oil & Energy Corporation (carbon fiber: PAN-based carbon fiber made by Toray Industries, Inc. (trade name: TORAYCA T300), matrix resin: 130° cured epoxy, carbon fiber mass per unit area: 198 g/m², resin content: 44.0 weight%, prepreg thickness: 0.250 mm) and the like can be used.

The vibration damping layer 73 is formed from a viscoelastic material with rigidity lower than the rigidity of the CFRP composing the outer layer 71 and the inner layer 72. A storage elastic modulus at 25° of the viscoelastic material of the vibration damping layer 73 is preferably in a range of 0.1 MPa or more and 2500 MPa or less, is more preferably in a range of 0.1 MPa or more and 250 MPa or less, and is further more preferably in a range of 0.1 MPa or more and 100 MPa or less. If the storage elastic modulus of the viscoelastic material is 2500 MPa or less, a sufficient vibration damping performance can be obtained, and if the storage elastic modulus is 0.1 MPa or more, reduction of the rigidity of the lower arm 7 is small, and the performance required as an industrial component can be satisfied. Further, since the outer layer 71 and the inner layer 72 are produced by thermally curing the carbon fiber prepregs, the viscoelastic material of the vibration damping layer 73 is preferably stable to the heat which is generated at that time. Furthermore, the viscoelastic material of the vibration damping layer 73 is preferably excellent in adhesion to the matrix resins of the outer layer 71 and the inner layer 72.

From the above viewpoints, the viscoelastic material composing the vibration damping layer 73 can be a flexible material as compared with the CFRP, such as rubber such as styrene-butadiene rubber (SBR), chloroprene rubber (CR), butyl rubber (IIR), nitrile rubber (NBR), and ethylene propylene rubber (EPM, EPDM), a polyester resin, a vinyl ester resin, a polyurethane resin, an epoxy resin in which an elastic modulus is reduced by adding rubber, elastomer or the like that is a polymer having a flexible chain, or the like.

Here, in the robot arm 3, the upper arm 5 has a similar configuration as the lower arm 7. That is, the upper arm 5 has an outer layer (outer layer 51 that will be described later) formed into a circular pipe shape, an inner layer that is formed into a circular pipe shape, and is disposed in an inner side of the outer layer to extend from the one end of the outer layer to the other end, and a vibration damping layer disposed between the outer layer and the inner layer. Namely, in the upper arm 5, the vibration damping layer is laminated on the inner layer to cover the inner layer in the circular pipe shape, and the outer layer is laminated on the vibration damping layer to cover the vibration damping layer. Note that the one end of the outer layer in this case is the base end 5a of the upper arm 5, and the other end of the outer layer is the tip end 5b of the upper arm 5. The upper arm 5 may be in the circular pipe shape in which an outside diameter and an inside diameter are not changed from the base end 5a thereof to the tip end 5b, or may be in a taper shape in which the outside diameter and the inside diameter are made smaller toward the tip end 5b from the base end 5a. In the case of the taper shape, the diameter thereof is made smaller toward the tip end 5b, that is, a weight of the tip end 5b side of the upper arm 5 is made smaller, and thereby, the vibration damping property can be improved.

The respective outer layer, the inner layer and the vibration damping layer of the upper arm 5 can be composed of the similar materials to the respective outer layer 71, the inner layer 72 and the vibration damping layer 73 of the lower arm 7. However, the outer layer and the inner layer of the upper arm 5 are composed by laminating a larger number of the carbon fiber prepregs than the outer layer 71 and the inner layer 72 of the lower arm 7 (for example, nine layers in the case of the outer layer, and seven layers in the case of the inner layer). Namely, since the upper arm 5 has a larger diameter than the lower arm, the upper arm 5 is configured to prevent collapsing fracture by being made thick by laminating a larger number of the carbon fiber prepregs than the lower arm. Thicknesses of the upper arm 5 and the lower arm 7 are set with a thickness/average diameter (= 1/2 of the sum of the outside diameter and the inside diameter) made 0.05 or more as the guideline. Therefore, as the diameters of the upper arm 5 and the lower arm 7 are larger, the thicknesses thereof become larger.

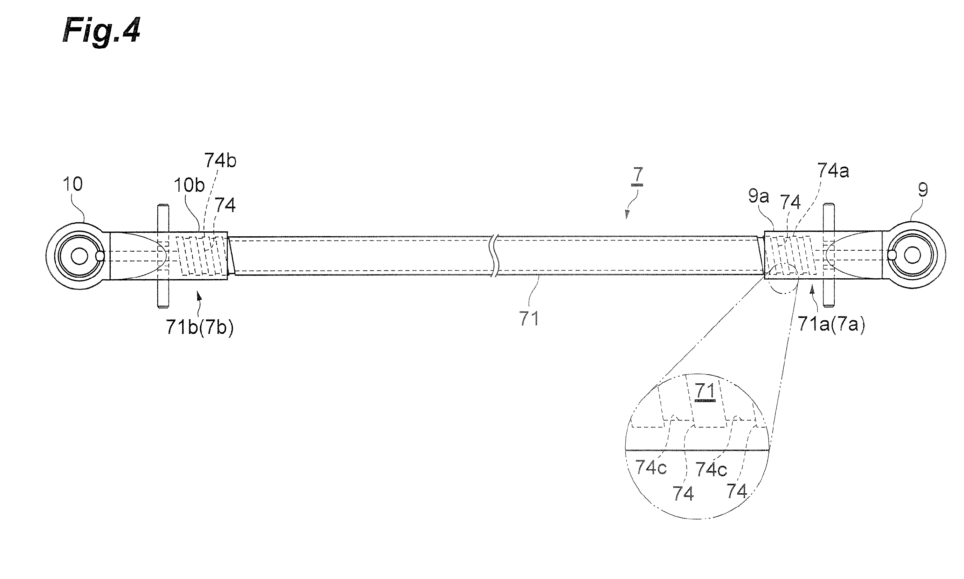

Figure 4 is a plan view showing a structure of an end portion of the lower arm 7. As shown in Figure 4, at an end portion including the base end 7a of the lower arm 7 (namely, the one end portion including the one end 71 a of the outer layer 71), a spiral screw groove 74 is formed at predetermined pitches (spiral work is applied), and thereby, a male screw 74a is provided. Meanwhile, the connecting member 9 is provided with a female screw 9a corresponding to the male screw 74a. Accordingly, the lower arm 7 and the connecting member 9 are bonded to each other with use of screwing of the male screw 74a and the female screw 9a in addition to bonding by an adhesive. Note that the screw groove 74 is formed to a depth reaching approximately two to three layers of the carbon fiber prepregs of the outer layer 71, and does not reach the vibration damping layer 73.

A sectional shape of the screw groove 74 shows a rectangular shape (U shape) in which a bottom portion 74c thereof is in a substantially linear shape. Namely, the bottom portion 74c of the screw groove 74 is flat. Therefore, when a certain stress occurs to the lower arm 7, concentration of the stress onto one portion of the bottom portion 74c of the screw groove 74 is avoided. As a result, fracture with the screw groove 74 as an origin is prevented.

Further, at an end portion including the tip end 7b of the lower arm 7 (namely, the other end portion including the other end 71 b of the outer layer 71), the spiral screw groove 74 is also formed at predetermined pitches, and thereby, a male screw 74b is provided. The connecting member 10 is provided with a female screw 10b corresponding to the male screw 74b. Accordingly, the lower arm 7 and the connecting member 10 are bonded by using screwing of the male screw 74b and the female screw 10b in addition to bonding by an adhesive.

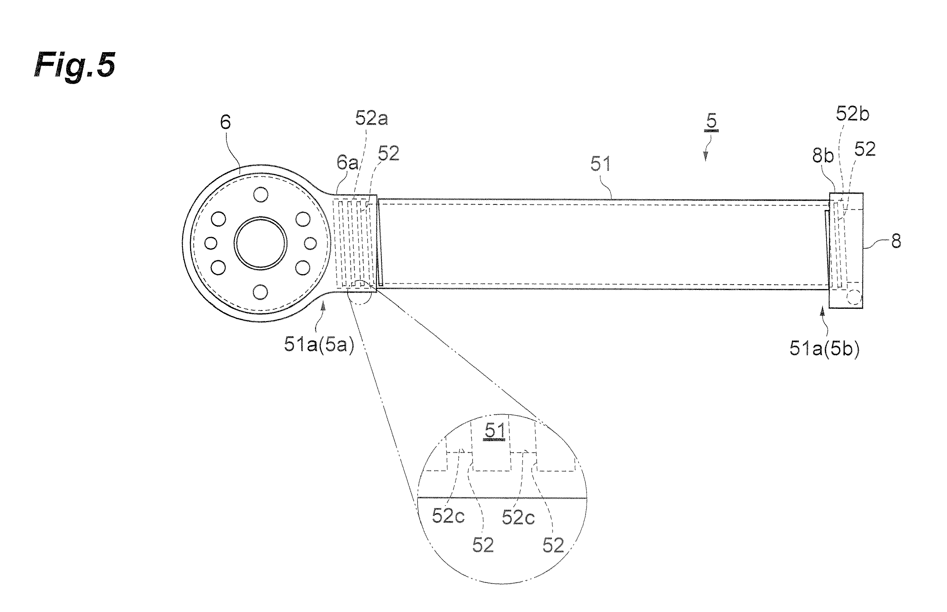

Figure 5 is a plan view showing a structure of the upper arm 5. As shown in Figure 5, the outer layer 51 in the base end 5a and the tip end 5b of the upper arm 5 is also provided with male screws 52a and 52b similarly to the outer layer 71 in the base end 7a and the tip end 7b of the lower arm 7. Namely, at an end portion including the base end 5a of the upper arm 5 (namely, the one end portion including the one end 51a of the outer layer 51), a spiral screw groove 52 is formed at predetermined pitches, and thereby, the male screw 52a is provided. The connecting member 6 is provided with a female screw 6a corresponding to the male screw 52a. Accordingly, the upper arm 5 and the connecting member 6 are bonded with use of screwing of the male screw 52a and the female screw 6a in addition to bonding by an adhesive. Note that a sectional shape of the groove 52 also shows a rectangular shape (U shape) in which a bottom portion 52c thereof is in a substantially linear shape similarly to the groove 74.

Furthermore, at an end portion including the tip end 5b of the upper arm 5 (namely, the other end portion including the other end 51b of the outer layer 51), the spiral screw groove 52 is formed at the predetermined pitches, and thereby, the male screw 52b is provided. The connecting member 8 is provided with a female screw 8b corresponding to the male screw 52b. Accordingly, the upper arm 5 and the connecting member 8 are bonded with use of screwing of the male screw 52b and the female screw 8b in addition to bonding by an adhesive.

Note that as the materials of the connecting members 6, 8, 9 and 10, for example, a metallic material such as an aluminum alloy, a titanium alloy, and SUS, for example, can be used, and from the viewpoints of reduction in weight and reduction in cost, use of an aluminum alloy is especially preferable. Further, as the adhesive for use in bonding the respective arms and the respective connecting members, a room temperature setting adhesive, and a thermosetting adhesive of epoxy, polyurethane and the like can be used.

As described above, the lower arm 7 includes the outer layer 71 and the inner layer 72 which are each formed into a circular pipe shape from CFRP, and therefore, rigidity is ensured. Further, the lower arm 7 includes the vibration damping layer 73 disposed between the outer layer 71 and the inner layer 72, and therefore, the vibration damping property is enhanced. Consequently, in the robot arm 3 using the lower arm 7, rigidity is ensured, and the vibration damping property is enhanced.

Further, in the lower arm 7, the vibration damping layer 73 shows the circular pipe shape, and therefore, the vibration damping property is isotropically enhanced with respect to circumferential directions of the outer layer 71 and the inner layer 72. Further, in the lower arm 7, the vibration damping layer 73 extends from the one end 71a of the outer layer 71 to the other end 71 b (namely, from the base end 7a of the lower arm 7 to the tip end 7b), and therefore, the vibration damping property is further enhanced.

Further, the upper arm 5 also includes the outer layer 51 and the inner layer which are each formed into a circular pipe shape by the CFRP, and the vibration damping layer disposed between the outer layer 51 and the inner layer. Accordingly, in the robot arm 3 further using the upper arm 5 in addition to the lower arm 7, higher rigidity is ensured, and the vibration damping property is further enhanced.

Further, in the lower arm 7, the outer layer 71 is formed into the circular pipe shape from the CFRP. Therefore, higher rigidity as compared with the shaped pipe body of a metal is ensured. Further, in the lower arm 7, for example, at the one end portion including the one end 71a of the outer layer 71, the male screw 74a is provided. Therefore, by providing the female screw 9a at the connecting member 9, screwing of the male screw 74a and the female screw 9a can be used in addition to bonding with the adhesive, at the time of bonding to the connecting member 9. Consequently, according to the lower arm 7, bonding to the connecting member can be reinforced. With respect to the upper arm 5, bonding to the connecting member also can be reinforced while rigidity is ensured similarly to the lower arm 7. Accordingly, connection of the main body 2 and the upper arm 5, connection of the upper arm 5 and the lower arm 7 and connection of the lower arm 7 and the picking device 4 can be reinforced.

Further, in the lower arm 7, the sectional shape of the screw groove 74 is a rectangular shape, and therefore, the bottom portion 74c thereof is flat. Therefore, when a certain stress occurs to the lower arm 7, concentration of the stress onto one portion of the bottom portion 74c of the screw groove 74 is avoided. As a result, fracture with the screw groove 74 as the origin is prevented. With respect to the upper arm 5, fracture with the screw groove 52 as the origin is also prevented similarly to the lower arm 7.

Further, in the lower arm 7, the inner layer 72 is also formed into the circular pipe shape from the CFRP, and therefore, higher rigidity is ensured. Further, in the lower arm 7, the vibration damping layer 73 is disposed between the outer layer 71 and the inner layer 72, and therefore, the vibration damping property is enhanced. With respect to the upper arm 5, rigidity is ensured, and the vibration damping property is enhanced, because the upper arm 5 has the similar configuration to the lower arm 7.

Further, in the lower arm 7, the vibration damping layer 73 is formed into the circular pipe shape, and therefore, the vibration damping property is isotropically enhanced with respect to the circumferential directions of the outer layer 71 and the inner layer 72. Further, in the lower arm 7, the vibration damping layer 73 is disposed between the outer layer 71 and the inner layer 72 to extend from the one end 71a of the outer layer 71 to the other end 71 b (namely, from the base end 7a of the lower arm 7 to the tip end 7b), and therefore, the vibration damping property is further enhanced.

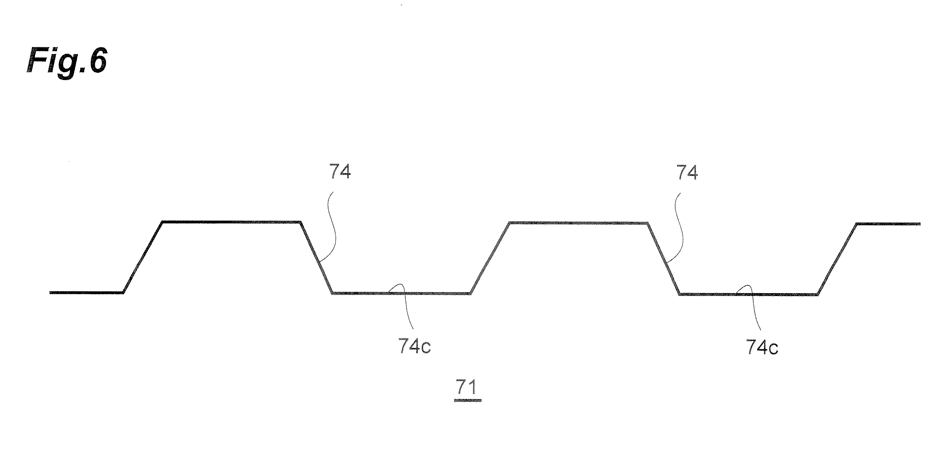

In the above embodiment, one embodiment of the shaped pipe body of the present invention is described, and the shaped pipe body of the present invention is not limited to the upper arm 5 and the lower arm 7 described above. For example, as shown in Figure 6, the sectional shape of the screw groove 74 can be made a trapezoidal shape (inverted trapezoid shape) which is narrowed toward an interior of the outer layer 71 with the bottom portion 74c being in a substantially linear shape. In this case, the bottom portion 74c of the screw groove 74 is flat, and therefore, concentration of a stress onto one portion of the bottom portion 74c of the screw groove 74 is avoided. As a result, fracture with the screw groove 74 as an origin is prevented. Note that a sectional shape of the screw groove 52 can be made an inverted trapezoid shape similar to the screw groove 74 in this case.

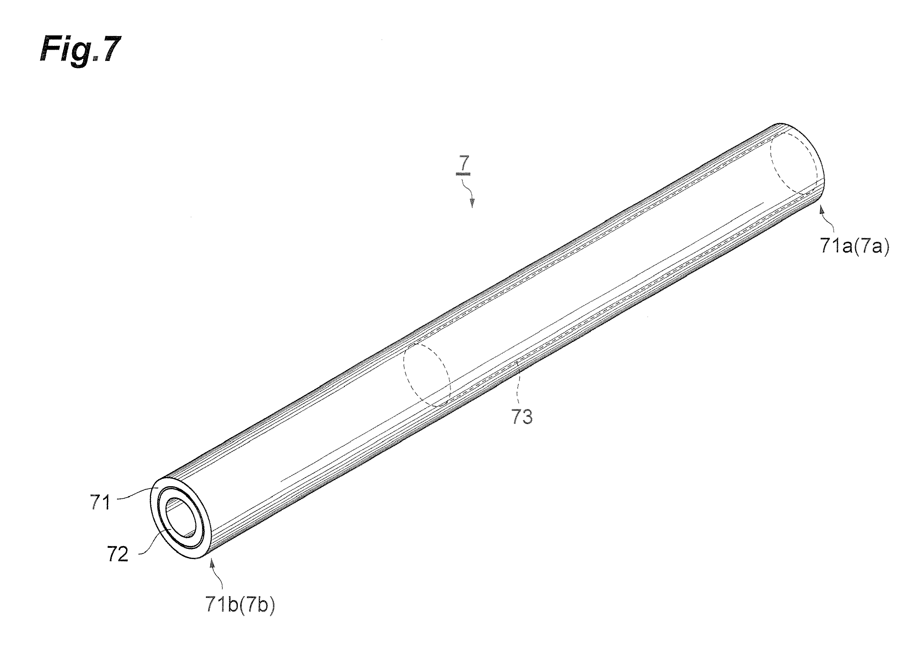

Further, in the lower arm 7, the vibration damping layer 73 can be made to have a mode as shown in Figure 7. As shown in Figure 7, the vibration damping layer 73 is disposed between the outer layer 71 and the inner layer 72 so as to extend from the one end 71a of the outer layer 71 to a predetermined position (position at a length of 2/3 of an entire length of the outer layer 71 in this case) between the one end 71 a and the other end 71b. Namely, the vibration damping layer 73 extends from the base end 7a of the lower arm 7 to the position at a length of approximately 2/3 of the entire length of the lower arm 7. As above, the vibration damping layer 73 is kept within the predetermined range at the base end 7a side of the lower arm 7, whereby the vibration damping property is enhanced, and reduction of rigidity is restrained. Note that for the upper arm 5, the vibration damping layer thereof also may have a similar configuration to that of the vibration damping layer 73 shown in Figure 7.

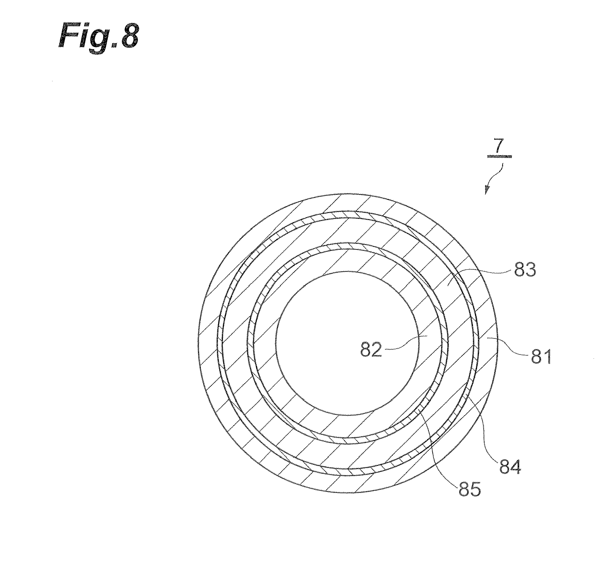

Further, the lower arm 7 can be made to have a mode shown in Figure 8. The lower arm 7 shown in Figure 8 has an outer layer 81 formed into a circular pipe shape, an inner layer 82 that is formed into a circular pipe shape and is disposed in an inner side of the outer layer 81 so as to extend from the one end of the outer layer 81 to the other end, an intermediate layer 83 that is formed into a circular pipe shape and is disposed between the outer layer 81 and the inner layer 82 so as to extend from the one end of the outer layer 81 to the other end, and two vibration damping layers 84 and 85 that are disposed between the outer layer 81 and the inner layer 82. The vibration damping layer 84 is disposed between the outer layer 81 and the intermediate layer 83, and the vibration damping layer 85 is disposed between the intermediate layer 83 and the inner layer 82.

Namely, in the lower arm 7, the vibration damping layer 85 is laminated on the inner layer 82 to cover the inner layer 82 in the circular pipe shape, the intermediate layer 83 is laminated on the vibration damping layer 85 to cover the vibration damping layer 85, the vibration damping layer 84 is laminated on the intermediate layer 83 to cover the intermediate layer 83, and the outer layer 81 is laminated on the vibration damping layer 84 to cover the vibration damping layer 84. Note that the one end of the outer layer 81 is the base end 7a of the lower arm 7, and the other end of the outer layer 81 is the tip end 7b of the lower arm 7.

The outer layer 81, the inner layer 82 and the intermediate layer 83 can be composed of a similar material to that of the outer layer 71 and the inner layer 72 described above. Further, the vibration damping layer 84 and the vibration damping layer 85 can be composed of a similar material to the vibration damping layer 73 described above. The lower arm 7 which is configured as above is used in the robot arm 3, and thereby, the vibration damping property can be further enhanced while higher rigidity is ensured.

### [Example 1]

As an example of the shaped pipe body of the present invention, a test shaped pipe body corresponding to the lower arm 7 was prepared. The specification of the test shaped pipe body is as shown in the following Table 1. Note that in the following tables including Table 1, "laminated angle" indicates an angle between a longitudinal direction of each of the shaped pipe bodies and an orientation direction of the carbon fiber. The laminated angle of 0° indicates the longitudinal direction of each of the shaped pipe bodies, the laminated angle of 90° indicates a circumferential direction of each of the shaped pipe bodies, and the laminated angles of ±45° indicate bias directions. Further, in the following tables, "Ply" represents the number of prepreg layers, and "MPT" represents a thickness of one prepreg layer.

As shown in Table 1, in the test shaped pipe body, as the inner layer 72, two layers of carbon fiber prepreg (carbon fiber prepreg B24N35R125 made by JX Nippon Oil & Energy Corporation) with the laminated angle of 90°, and three layers of carbon fiber prepreg (carbon fiber prepreg E6025E-26K made by JX Nippon Oil & Energy Corporation) with the laminated angle of 0° were used.

Further, in the test shaped pipe body, as the outer layer 71, two layers of carbon fiber prepreg (carbon fiber prepreg B24N35R125 made by JX Nippon Oil & Energy Corporation) with the laminated angle of 90°, and four layers of carbon fiber prepreg (carbon fiber prepreg B24N35R125 made by JX Nippon Oil & Energy Corporation) with the laminated angle of 0° were used. Moreover, in the test shaped pipe body, as the vibration damping layer 73, an SBR sheet (made by Ask Industries Co., Ltd., trade name: Asner Sheet) was used. The SBR sheet as the vibration damping layer 73 was disposed from the base end of the test shaped pipe body to the tip end (namely, throughout the entire length of the test shaped pipe body).

The carbon fiber prepregs and the SBR sheet as above were laminated by being wound on a cylindrical core material of aluminum or the like in the sequence of Table 1, and thermally cured while the carbon fiber prepregs were fixed by a heat-shrinkable tape of PP, PET or the like being wound thereon from the outer side of the carbon fiber prepregs, after which, the core material was extracted, whereby the test shaped pipe body in a cylindrical shape with an inside diameter of 10.47 mm, an outside diameter of 14.00 mm, and a length of 900 mm was obtained.

**[Table 1]**

| | LAMINATED ANGLE | PREPREG | Ply | LAMINATION THICKNESS [mm] | INSIDE DIAMETER [mm] | OUTSIDE DIAMETER [mm] | MPT [mm] |
|---|---|---|---|---|---|---|---|
| 1 | 90° | B24N35R125 | 2 | 0.252 | 10.47 | 10.97 | 0.126 |
| 2 | 0° | E6025E-26K | 3 | 0.606 | 10.97 | 12.19 | 0.202 |
| 3 | - | SBR | 1 | 0.15 | 12.19 | 12.49 | 0.15 |
| 4 | 90° | B24N35R125 | 2 | 0.252 | 12.49 | 12.99 | 0.126 |
| 5 | 0° | B24N35R125 | 4 | 0.504 | 12.99 | 14.00 | 0.126 |
| THICKNESS | | | | 1.764 | mm | 14.00 | |

Meanwhile, as a comparative example of the test shaped pipe body, the comparison shaped pipe body was prepared as follows. The specification of the comparison shaped pipe body is as shown in the following Table 2. Namely, the comparison shaped pipe body differs from the test shaped pipe body in that the comparison shaped pipe body does not have a layer corresponding to the vibration damping layer 73. The carbon fiber prepregs were laminated by being wound on a cylindrical core material in the sequence of Table 2, and thermally cured while the carbon fiber prepregs were fixed by a heat-shrinkable tape of PP, PET or the like being wound thereon from the outer side of the carbon fiber prepregs, after which, the core material was extracted, whereby the comparison shaped pipe body in a cylindrical shape with an inside diameter of 10.77 mm, an outside diameter of 14.00 mm, and a length of 900 mm was obtained.

**[Table 2]**

| | LAMINATED ANGLE | PREPREG | Ply | LAMINATION THICKNESS [mm] | INSIDE DIAMETER [mm] | OUTSIDE DIAMETER [mm] | MPT [mm] |
|---|---|---|---|---|---|---|---|
| 1 | 90° | B24N35R125 | 2 | 0.252 | 10.77 | 11.27 | 0.126 |
| 2 | 0° | E6025E-26K | 3 | 0.606 | 11.27 | 12.49 | 0.202 |
| 3 | 90° | B24N35R125 | 2 | 0.252 | 12.49 | 12.99 | 0.126 |
| 4 | 0° | B24N35R125 | 4 | 0.504 | 12.99 | 14.00 | 0.126 |
| THICKNESS | | | | 1.614 | mm | 14.00 | |

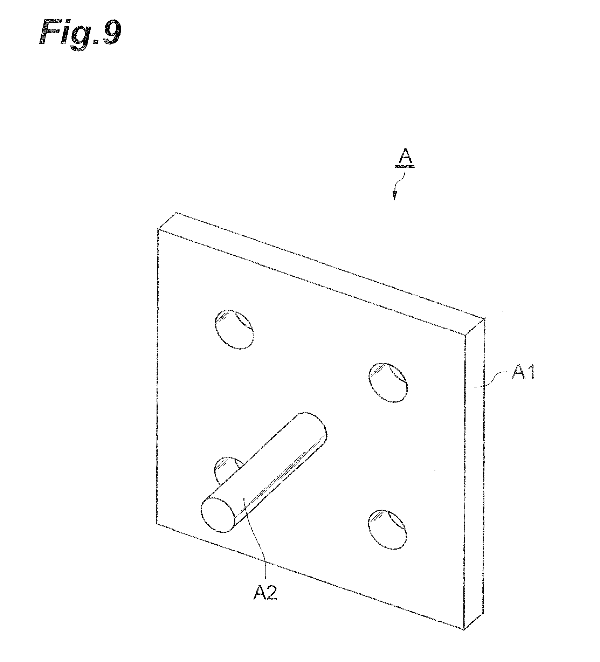

The vibration damping properties of the test shaped pipe body and the comparison shaped pipe body which were prepared as above were evaluated. The evaluation method of the vibration damping properties of the test shaped pipe body and the comparison shaped pipe body is as follows. First, as shown in Figure 9, a holding member A made of aluminum is prepared. The holding member A is composed of a base section A1 in a planar shape (a width of 100 mm, a height of 100 mm, and a thickness of 10 mm), and a holding section A2 in a columnar shape that is provided to protrude from a substantially central portion of the base section A1. An outside diameter of the holding section A2 is set to be substantially the same as the inside diameter of the test shaped pipe body.

Subsequently, a tip end portion of the holding section A2 is inserted into the test shaped pipe body by approximately 50 mm from the one end portion of the test shaped pipe body, and in this state, the test shaped pipe body and the holding section A2 are bonded by an adhesive. Subsequently, the base section A1 is fixed to a fixed wall. Thereby, the test shaped pipe body is in a cantilever beam state.

Subsequently, a weight of 1 kg is suspended at the other end portion (tip end portion) of the test shaped pipe body. Subsequently, the string for suspending the weight is cut, and thereby the test shaped pipe body is caused to generate free vibration.

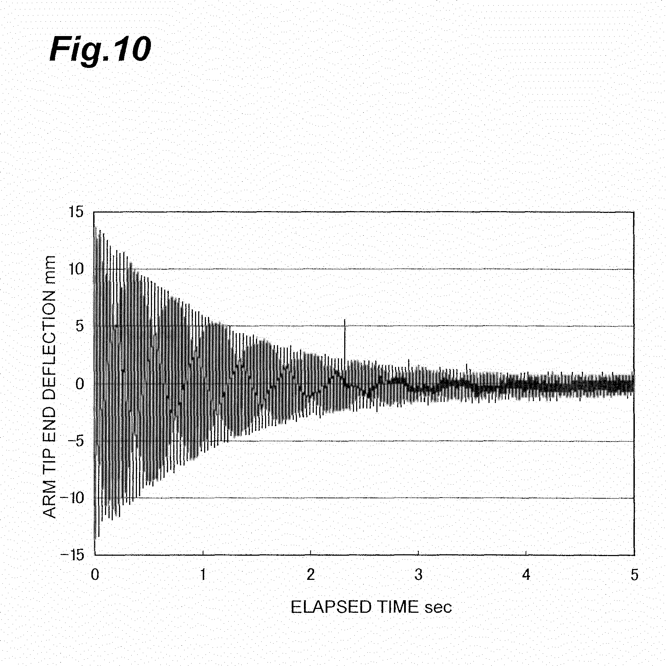

Subsequently, displacement of the tip end portion of the test shaped pipe body during free vibration is measured with a laser displacement gauge. By the above steps, a damping free vibration waveform shown in Figure 10 was obtained. Note that since the reflection of the laser of the laser displacement gauge varied due to the fact that the test shaped pipe body is in the cylindrical shape, a light plate was mounted to the tip end portion of the test shaped pipe body, and the plate was used as the target for the laser.

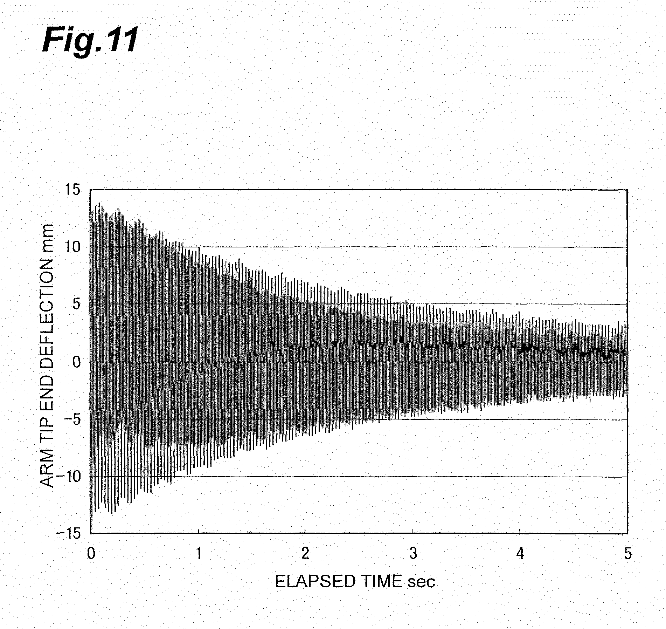

Similar steps were performed for the comparison shaped pipe body, and a damping free vibration waveform shown in Figure 11 was obtained. Note that the outside diameter of the holding section A2 was set to be substantially the same as the inside diameter of the comparison shaped pipe body.

As shown in Figure 10 and Figure 11, in the test shaped pipe body, displacement (arm tip end deflection in the drawings) of the tip end portion due to vibration was damped more quickly as compared with the comparison shaped pipe body. Accordingly, it has been confirmed that the vibration damping property is enhanced by providing the vibration damping layer composed of SBR between the inner layer and the outer layer composed of CFRP.

### [Example 2]

As another example of the shaped pipe body of the present invention, a test shaped pipe body corresponding to the upper arm 5 was prepared. The specification of the test shaped pipe body is as shown in the following Table 3.

As shown in Table 3, in the test shaped pipe body, as the inner layer, two layers of carbon fiber prepreg (carbon fiber prepreg B24N35R125 made by JX Nippon Oil & Energy Corporation) with the laminated angle of 90°, one layer of carbon fiber prepreg (carbon fiber prepreg B24N35R125 made by JX Nippon Oil & Energy Corporation) with the laminated angle of -45°, one layer of carbon fiber prepreg (carbon fiber prepreg B24N35R125 made by JX Nippon Oil & Energy Corporation) with the laminated angle of 45°, and three layers of carbon fiber prepreg (carbon fiber prepreg E24N33C269 made by JX Nippon Oil & Energy Corporation) with the laminated angle of 0° were used.

Further, in the test shaped pipe body, as the outer layer 51, one layer of carbon fiber prepreg (carbon fiber prepreg B24N35R125 made by JX Nippon Oil & Energy Corporation) with the laminated angle of -45°, one layer of carbon fiber prepreg (carbon fiber prepreg B24N35R125 made by JX Nippon Oil & Energy Corporation) with the laminated angle of 45°, three layers of carbon fiber prepreg (carbon fiber prepreg B24N33C269 made by JX Nippon Oil & Energy Corporation) with the laminated angle of 0°, two layers of carbon fiber prepreg (plain-woven carbon fiber prepreg FMP61-2026A made by JX Nippon Oil & Energy Corporation) with the laminated angle of 0°/90°, and two layers of carbon fiber prepreg (carbon fiber prepreg B24N35R125 made by JX Nippon Oil & Energy Corporation) with the laminated angle of 90° were used.

Further, in the test shaped pipe body, as the vibration damping layer, an SBR sheet (made by Ask Industries Co., Ltd., trade name: Asner Sheet) was used. Note that in the test shaped pipe body, the SBR sheet was disposed in a range from the base end of the test shaped pipe body to the position of a length of 2/3 of the entire length of the test shaped pipe body.

The carbon fiber prepregs and the SBR sheet as above were laminated by being wound on a cylindrical core material in the sequence of Table 3, and thermally cured while the carbon fiber prepregs were fixed by a heat-shrinkable tape of PP, PET or the like being wound thereon from the outer side of the carbon fiber prepregs, after which, the core material was extracted, whereby the test shaped pipe body in a cylindrical shape with an inside diameter of 48.52 mm, an outside diameter of 55.00 mm, and a length of 300 mm was obtained.

**[Table 3]**

| | LAMINATED ANGLE | PREPREG | Ply | LAMINATION THICKNESS [mm] | INSIDE DIAMETER [mm] | OUTSIDE DIAMETER [mm] | MPT [mm] |
|---|---|---|---|---|---|---|---|
| 1 | 90° | B24N35R125 | 2 | 0252 | 48.52 | 49.02 | 0.126 |
| 2 | -45° | B24N35R125 | 1 | 0.126 | 49.02 | 49.28 | 0.126 |
| 3 | 45° | B24N35R125 | 1 | 0.126 | 49.28 | 49.53 | 0.126 |
| 4 | 0° | B24N33C269 | 3 | 0.786 | 49.53 | 51.10 | 0.262 |
| 5 | - | SBR | 1 | 0.15 | 51.10 | 51.40 | 0.15 |
| 6 | -45° | B24N35R125 | 1 | 0.126 | 51.40 | 51.65 | 0.126 |
| 7 | 45° | B24N35R125 | 1 | 0.126 | 51.65 | 51.90 | 0.126 |
| 8 | 0° | B24N33C269 | 3 | 0.786 | 51.90 | 53.48 | 0.262 |
| 9 | 0°/90° | FMP61-2026A | 1 | 0.256 | 53.48 | 53.99 | 0.256 |
| 10 | 90° | B24N35R125 | 2 | 0.252 | 53.99 | 54.49 | 0.126 |
| 11 | 0°/90° | FMP61-2026A | 1 | 0.256 | 54.49 | 55.00 | 0.256 |
| THICKNESS | | | | 3.242 | mm | | |

Meanwhile, as a comparative example of the test shaped pipe body, the comparison shaped pipe body was prepared as follows. The specification of the comparison shaped pipe body is as shown in the following Table 4. Namely, the comparison shaped pipe body differs from the test shaped pipe body described above in that the comparison shaped pipe body does not have a layer corresponding to the vibration damping layer. The carbon fiber prepregs were laminated by being wound on a cylindrical core material in the sequence of Table 4, and thermally cured while the carbon fiber prepregs were fixed by a heat-shrinkable tape of PP, PET or the like being wound thereon from the outer side of the carbon fiber prepregs, after which, the core material was extracted, whereby the comparison shaped pipe body in a cylindrical shape with an inside diameter of 48.82 mm, an outside diameter of 55.00 mm, and a length of 300 mm was obtained.

**[Table 4]**

| | LAMINATED ANGLE | PREPREG | Ply | LAMINATION THICKNESS [mm] | INSIDE DIAMETER [mm] | OUTSIDE DIAMETER [mm] | MPT [mm] |
|---|---|---|---|---|---|---|---|
| 1 | 90° | B24N35R125 | 2 | 0.252 | 48.82 | 49.32 | 0.126 |
| 2 | -45° | B24N35R125 | 1 | 0.126 | 49.32 | 49.58 | 0.126 |
| 3 | 45° | B24N35R125 | 1 | 0.126 | 49.58 | 49.83 | 0.126 |
| 4 | 0° | B24N33C269 | 3 | 0.786 | 49.83 | 51.40 | 0.262 |
| 5 | -45° | B24N35R125 | 1 | 0.126 | 51.40 | 51.65 | 0.126 |
| 6 | 45° | B24N35R125 | 1 | 0.126 | 51.65 | 51.90 | 0.126 |
| 7 | 0° | B24N33C269 | 3 | 0.786 | 51.90 | 53.48 | 0.262 |
| 8 | 0°/90° | FMP61-2026A | 1 | 0.256 | 53.48 | 53.99 | 0.256 |
| 9 | 90° | B24N35R125 | 2 | 0.252 | 53.99 | 54.49 | 0.126 |
| 10 | 0°/90° | FMP61-2026A | 1 | 0.256 | 54.49 | 55.00 | 0.256 |
| THICKNESS | | | | 3.092 | mm | | |

In the test shaped pipe body which was prepared as above, the vibration damping property is enhanced more as compared with the corresponding comparison shaped pipe body.

### [Example 3]

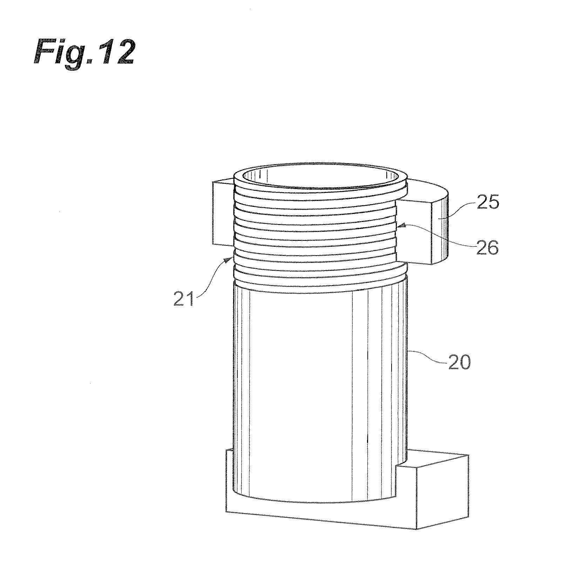

As an example of the shaped pipe body of the present invention, the test shaped pipe body was prepared as follows. More specifically, a lamination configuration thereof was made similar to the lamination configuration shown in Table 3. However, in the test shaped pipe body, the SBR sheet as the vibration damping layer was disposed from the base end of the test shaped pipe body to the tip end (namely, throughout the entire length of the test shaped pipe body). The SBR sheet and the carbon fiber prepregs as above were laminated in a plurality of layers by being wound on a cylindrical core material in the sequence of Table 3, and thermally cured while the carbon fiber prepregs were fixed by a heat-shrinkable tape of PP, PET or the like being wound thereon from the outer side of the carbon fiber prepregs, after which, the core material was extracted, whereby the CFRP shaped pipe body in a cylindrical shape with an inside diameter of φ49 mm, an outside diameter of φ55.48 mm, a thickness of 3.24 t and a length of 100 mm was shaped. Thereafter, the shaped pipe body was adjusted to have an outside diameter of φ55 mm by centerless grinding. Subsequently, a spiral screw groove was formed at pitches of 5 mm on the surface (outer layer) of the one end portion of the CFRP shaped pipe body, whereby a male screw was provided, and a test shaped pipe body 20 shown in Figure 12 was obtained. The concrete specification of a male screw 21 of the test shaped pipe body 20 was a protruded portion of φ55 mm (tolerance of -0.05 mm to -0.10 mm), a recessed portion of φ54 mm (tolerance of -0.05 mm to -0.10 mm), and a groove depth of 0.5 mm.

The male screw 21 was formed with the procedure of ordinary screw cutting. More specifically, after the CFRP shaped pipe body was shaped as described above, a cutting tool was moved at a predetermined speed along the longitudinal direction of the CFRP shaped pipe body while the CFRP shaped pipe body was set on a lathe and rotated, whereby the male screw 21 was formed. Note that instead of the cutting tool, a disk-shaped grindstone may be used.

Meanwhile, a bonding member 25 in a cylindrical shape with an outside diameter of φ80 mm and a thickness of 20 mm was produced of aluminum. On an inner side of the bonding member 25, a female screw 26 was formed to be able to be screwed onto the male screw 21 of the test shaped pipe body 20. The concrete specification of the female screw 26 was a groove pitch of 5 mm, a protruded portion of φ54 mm (tolerance of +0.15 mm to +0.10 mm), a recessed portion of φ55 mm (tolerance of +0.15 mm to +0.10 mm), and a groove depth of 0.5 mm. After an adhesive was applied to the male screw 21 of the test shaped pipe body 20 and the female screw 26 of the bonding member 25, the bonding member 25 was screwed onto the male screw 21 of the test shaped pipe body 20, and the adhesive was heated and cured.

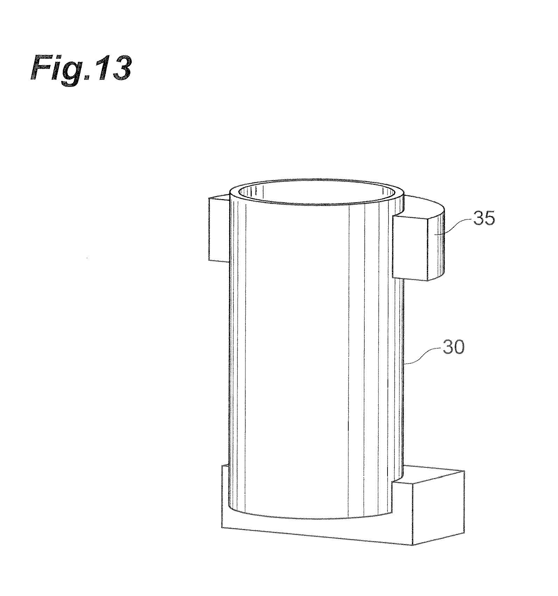

As a comparative example of the test shaped pipe body 20, a comparison shaped pipe body 30 shown in Figure 13 was prepared. The comparison shaped pipe body 30 differs from the test shaped pipe body 20 in that the comparison shaped pipe body 30 does not have a male screw. Meanwhile, a bonding member 35 that is bonded to the comparison shaped pipe body 30 was prepared. The bonding member 35 differs from the bonding member 25 in that the bonding member 35 does not have a female screw. After an adhesive was applied to a bonding portion (namely, a surface of the one end portion) of the comparison shaped pipe body 30 and a bonding portion (namely, an inner surface) of the bonding member 35, the one end portion of the comparison shaped pipe body 30 was inserted into the bonding member 35, and the adhesive was heated and cured.

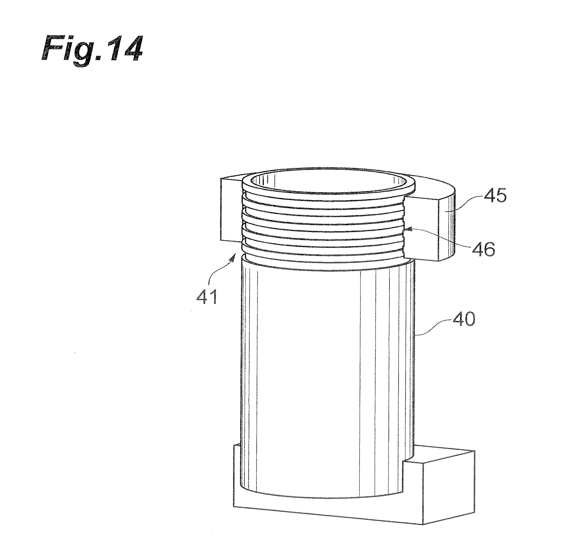

As another comparative example of the test shaped pipe body 20, a comparison shaped pipe body 40 shown in Figure 14 was prepared. The comparison shaped pipe body 40 differs from the test CFRP pipe 20 in that the comparison shaped pipe body 40 has a recessed and protruded portion 41 instead of the male screw 21. The recessed and protruded portion 41 was formed by providing a plurality of grooves circumferentially on a surface of the one end portion of the CFRP shaped pipe body. The concrete specification of the recessed and protruded portion 41 was a groove pitch of 5 mm, a protruded portion of φ55 mm (tolerance of -0.05 mm to -0.10 mm), a recessed portion of φ54 mm (tolerance of -0.05 mm to -0.10 mm), and a groove depth of 0.5 mm.

Meanwhile, a bonding member 45 that is bonded to the comparison shaped pipe body 40 was prepared. The bonding member 45 differs from the bonding member 25 in that the bonding member 45 has a recessed and protruded portion 46 instead of the male screw. The concrete specification of the recessed and protruded portion 46 was a groove pitch of 5 mm, a protruded portion of φ55 mm (tolerance of +0.15 mm to +0.10 mm), a recessed portion of φ56 mm (tolerance of +0.15 mm to +0.10 mm), and a groove depth of 0.5 mm. After an adhesive was applied to the recessed and protruded portion 41 of the comparison shaped pipe body 40 and the recessed and protruded portion 46 of the bonding member 45, the comparison shaped pipe body 40 was inserted in the bonding member 45, and the adhesive was heated and cured.

For bonding of the respective shaped pipe bodies and the respective bonding members, as the adhesive, a two-liquid mixing type epoxy adhesive made by Nagase ChemteX Corporation (base resin: AW-106, curing agent: HV-953U) was used. Further, in bonding of the respective shaped pipe bodies and the respective bonding members, the respective shaped pipe bodies and the respective bonding members were kept in a heating furnace that was kept at 60°C for about one hour in order to cure the adhesive.

The bonding strength of the test shaped pipe body 20 and the bonding member 25 which were prepared as above, the bonding strength of the comparison shaped pipe body 30 and the bonding member 35, and the bonding strength of the comparison shaped pipe body 40 and the bonding member 45 were evaluated by a punching test. In the punching test, the test speed was 1 mm/minute. The evaluation result is as shown in Table 5 as follows. According to the result of Table 5, the bonding strength (breaking load) of the test shaped pipe body 20 and the bonding member 25 was the highest. Accordingly, it has been confirmed that by using screwing of the screws for bonding of the shaped pipe body of CFRP and the bonding member of aluminum, the bonding strength is enhanced.

**[Table 5]**

| PUNCHING TEST RESULT | | | |
|---|---|---|---|
| | TEST SHAPED PIPE BODY 20 | COMPARISON SHAPED PIPE BODY 30 | COMPARISON SHAPED PIPE BODY 40 |
| BREAKING LOAD kgf | 7,935 | 3,040 | 3,320 |
| | 8,260 | 2,860 | 4,140 |
| | 7,380 | 3,190 | 4,595 |
| AVERAGE kgf | 7,858 | 3,030 | 4,018 |

### Industrial Applicability

According to the present invention, the shaped pipe body capable of ensuring rigidity of the robot arm and enhancing the vibration damping property, and the shaped pipe body capable of reinforcing bonding to the connecting member while ensuring rigidity can be provided.

### Reference Signs List

1 ... picking robot, 3 ... robot arm, 5 ... upper arm (shaped pipe body), 5a ... base end (one end), 5b ... tip end (the other end), 7 ... lower arm (shaped pipe body), 7a ... base end (one end), 7b ... tip end (other end), 51 ... outer layer, 51a ... one end, 51b ... other end, 52 ... screw groove, 52a, 52b ... male screw, 71, 81 ... outer layer, 72, 82 ... inner layer, 71a ... one end, 71b ... other end, 74 ... screw groove, 74a, 74b ... male screw, 73, 84, 85 ... vibration damping layer.

## Claims

1. A shaped pipe body for use in a robot arm of a picking robot for picking up and transferring an object, comprising:
an outer layer that is formed into a circular pipe shape from a carbon fiber reinforced plastic;
an inner layer that is formed into a circular pipe shape from a carbon fiber reinforced plastic, and is disposed in an inner side of the outer layer to extend from one end of the outer layer to the other end; and
a vibration damping layer that is disposed between the outer layer and the inner layer.

2. The shaped pipe body according to claim 1,
wherein the vibration damping layer is formed into a circular pipe shape.

3. The shaped pipe body according to claim 1 or 2,
wherein the vibration damping layer is disposed between the outer layer and the inner layer to extend from the one end to the other end.

4. The shaped pipe body according to claim 1 or 2,
wherein the vibration damping layer is disposed between the outer layer and the inner layer to extend from the one end to a predetermined position between the one end and the other end.

5. A shaped pipe body for use in a robot arm of a picking robot for picking up and transferring an object, comprising:
an outer layer that is formed into a circular pipe shape from a carbon fiber reinforced plastic,
wherein a male screw is provided on at least one end portion of the outer layer.

6. The shaped pipe body according to claim 5,
wherein a sectional shape of a screw groove of the male screw is a rectangular shape.

7. The shaped pipe body according to claim 5,
wherein a sectional shape of a screw groove of the male screw is a trapezoidal shape that is narrowed toward an interior of the outer layer.

8. The shaped pipe body according to any one of claims 5 to 7, further comprising:
an inner layer that is formed into a circular pipe shape from a carbon fiber reinforced plastic, and is disposed in an inner side of the outer layer to extend from one end of the outer layer to the other end; and
a vibration damping layer that is disposed between the outer layer and the inner layer.

9. The shaped pipe body according to claim 8,
wherein the vibration damping layer is formed into a circular pipe shape.

10. The shaped pipe body according to claim 8 or 9,
wherein the vibration damping layer is disposed between the outer layer and the inner layer to extend from the one end to the other end.

11. The shaped pipe body according to claim 8 or 9,
wherein the vibration damping layer is disposed between the outer layer and the inner layer to extend from the one end to a predetermined position between the one end and the other end.
